# EUROPÄISCHE PATENTANMELDUNG

(11) **EP 3 428 593 A1**
(43) Veröffentlichungstag der Anmeldung: **16.01.2019**
(21) Anmeldenummer: 18020299.6
(22) Anmeldetag: 02.07.2018
(51) Int. Cl.: G01K 1/14

(54) **FLUIDLEITUNGSBAUTEIL UND VERFAHREN ZU DESSEN HERSTELLUNG**

(30) Priorität: 10.07.2017 EP 17020288
(71) Anmelder: Linde Aktiengesellschaft, 80331 München (DE)
(72) Erfinder: Steinbauer, Manfred, 82399 Raisting (DE); Müller-Thorwart, Ole, 82223 Eichenau (DE); Braun, Konrad, 83661 Lenggries (DE); Estiot, Elise, 81379 München (DE); Gewald, Stefan, 81379 München (DE)
(74) Vertreter: Meilinger, Claudia Sabine

(57) **Zusammenfassung**

Die Erfindung betrifft ein Fluidleitungsbauteil (10), welches dazu ausgelegt ist, von einem Fluid in einer Strömungsrichtung (100) durchströmt zu werden. Das Fluidleitungsbauteil weist eine Leitungswand (12) auf, welche sich entlang der Strömungsrichtung (100) erstreckt und zumindest teilweise einen Leitungskanal (14) bildet. Ferner weist das Fluidleitungsbauteil (10) zumindest eine Kapillare (16) auf, welche zumindest teilweise entlang der Strömungsrichtung (100) und innerhalb der Leitungswand (12) verläuft und von dieser umschlossen ist und/oder innerhalb eines an einer dem Leitungskanal (14) zugewandten Innenseite (12a) der Leitungswand (12) angeordneten Kapillarenmodul (20) angeordnet ist und von diesem umschlossen ist. Die Leitungswand (12) ist dabei mit der zumindest teilweise darin verlaufenden Kapillare (16) und/oder mit dem Kapillarenmodul (20) zumindest teilweise durch ein additives Fertigungsverfahren ausgebildet. Ferner betrifft die Erfindung ein Verfahren zur Herstellung eines Fluidleitungsbauteils.

## Beschreibung

Die Erfindung betrifft ein Fluidleitungsbauteil und ein Verfahren zu dessen Herstellung und liegt somit insbesondere auf dem technischen Gebiet von Rohrleitungen und/oder drucktragenden Bauteilen im Bereich der Verfahrenstechnik.

### Stand der Technik

In Anlagen der verfahrenstechnischen Industrie ist häufig eine Kenntnis von Temperaturen und/oder Temperaturverläufen innerhalb der beteiligten Apparate von großer Bedeutung. Insbesondere kann beispielsweise eine genaue Kenntnis der Temperatur und/oder des Temperaturverlaufs und/oder des Drucks in Fluidleitungsbauteilen in Reaktoren und/oder Wärmetauschern für einen sicheren Betrieb und/oder für einen effizienten Verfahrensablauf von entscheidender Bedeutung sein. Vor allem können oftmals in derartigen Anlagen ablaufende Verfahren und/oder Prozesse umso effizienter geregelt und/oder gesteuert werden, je genauer die Temperatur und/oder der Temperaturverlauf und/oder der Druck in den beteiligten Apparaten bekannt ist. Außerdem kann die genaue Kenntnis der Temperatur und/oder des Temperaturverlaufs und/oder des Drucks in verfahrenstechnischen Anlagen vorteilhaft für die Vermeidung von thermischen Spannungen und/oder Überhitzungen und somit für die Vermeidung von Schäden sein.

Temperaturmessungen in derartigen Apparaten sind daher von zentraler technischer Bedeutung. Zur Temperaturmessung in Apparaten werden in der Industrie häufig lokale bzw. lokal angebrachte Temperatursensoren, welche punktuell an deren Anbringungsstelle die Temperatur messen, und/oder über einen ausgedehnten Längenbereich messende Sensorkabel, wie etwa Glasfaserkabel, verwendet.

Die Messung einer Materialtemperatur von manchen komplex geformten und/oder unzugänglich angeordneten Bauteilen, wie etwa von Rohren in einem Wärmetauscher, ist dabei oftmals mit großen technischen Schwierigkeiten verbunden. Dazu werden häufig an der Außenseite des zu überwachenden Bauteils Temperatursensoren angelegt und/oder angeklebt. Dies birgt jedoch den Nachteil, dass die von den Temperatursensoren gemessenen Temperaturen von einem die Bauteile umgebenden Fluid beeinflusst werden können und daher die Temperaturmessungen unter Umständen verfälscht werden können. Außerdem können an den Bauteilen angebrachte Sensoren durch ein das Bauteil umgebendes Fluid beschädigt werden.

Der Erfindung liegt daher die Aufgabe zugrunde, ein Fluidleitungsbauteil bereitzustellen, welches eine verbesserte Anordnung von Sensoren ermöglicht.

### Offenbarung der Erfindung

Diese Aufgabe wird durch ein Fluidleitungsbauteil und ein Verfahren zur Herstellung eines solchen mit den Merkmalen der jeweiligen unabhängigen Ansprüche gelöst. Bevorzugte Ausführungsformen sind Gegenstand der abhängigen Ansprüche sowie der nachfolgenden Beschreibung.

In einem ersten Aspekt betrifft die Erfindung ein Fluidleitungsbauteil, welches dazu ausgelegt ist, von einem Fluid in einer Strömungsrichtung durchströmt zu werden. Das Fluidleitungsbauteil weist eine Leitungswand auf, welche sich entlang der Strömungsrichtung erstreckt und zumindest teilweise einen Leitungskanal bildet. Ferner weist das Fluidleitungsbauteil zumindest eine Kapillare auf, welche zumindest teilweise entlang der Strömungsrichtung und innerhalb der Leitungswand verläuft und von dieser umschlossen ist und/oder innerhalb eines an einer dem Leitungskanal zugewandten Innenseite der Leitungswand angeordneten Kapillarenmodul angeordnet ist und von diesem umschlossen ist. Die Leitungswand ist dabei mit der zumindest teilweise darin verlaufenden Kapillare und/oder mit dem Kapillarenmodul zumindest teilweise durch ein additives Fertigungsverfahren ausgebildet.

In einem weiteren Aspekt betrifft die Erfindung ein Verfahren zur Herstellung eines Fluidleitungsbauteils, umfassend ein Ausbilden einer einen Leitungskanal umschließenden Leitungswand mit zumindest einer innerhalb der Leitungswand verlaufenden und von der Leitungswand umschlossenen Kapillare und/oder mit einem an einer Innenseite der Leitungswand angeordneten Kapillarenmodul, in welchem die Kapillare verläuft und welches die Kapillare umschließt, wobei das Ausbilden zumindest teilweise durch ein additives Fertigungsverfahren erfolgt.

Das Fluidleitungsbauteil kann beispielsweise ein Rohrleitungsbauteil und/oder eine Düse aufweisen oder als solches bzw. solche ausgebildet sein.

Das Fluid kann dabei ein flüssiges und/oder gasförmiges Fluid aufweisen. Insbesondere kann das Fluid in dem Leitungskanal unter einem sehr großen Druck stehen, welcher insbesondere sehr viel größer sein kann, als ein Druck an einer Außenseite des Fluidleitungselements.

Die Strömungsrichtung ist dabei die Richtung, entlang welcher das Strömen des Fluides durch das Fluidleitungsbauteil vorgesehen ist. Sofern ein Fluidleitungsbauteil dazu ausgelegt ist, in beidseitiger Richtung durchströmt werden zu können, d.h. in einer ersten Orientierung oder in dazu entgegengesetzter Orientierung, soll die entgegengesetzte Orientierung auch als Strömungsrichtung gelten.

Die Leitungswand ist dabei als Wandung des Fluidleitungsbauteils zu verstehen. Insbesondere kann die Leitungswand rohrförmig ausgebildet sein, wobei eine Querschnittsform der Leitungswand bzw. des Fluidleitungsbauteils weitgehend beliebig ausgestaltet werden kann. Beispielsweise kann die Leitungswand eine gleichbleibende oder eine entlang der Strömungsrichtung variierende Querschnittsform aufweisen. Eine Wandstärke der Leitungswand kann dabei ebenfalls gleichbleibend oder entlang der Strömungsrichtung und/oder entlang des Querschnittumfangs variierend ausgestaltet sein. Beispielsweise kann eine Wandstärke zwischen 1 mm und 20 cm betragen.

Der Leitungskanal wird vorzugsweise durch die Leitungswand alleine oder durch die Leitungswand zusammen mit anderweitigen Bauteilen gebildet. Vorzugsweise umschließt die Leitungswand ein Innenvolumen bzw. einen Innenraum, welches bzw. welcher jedoch beispielsweise entlang der Strömungsrichtung Öffnungen aufweisen kann, wobei der Leitungskanal vorzugweise durch dieses Innenvolumen gebildet wird.

Die Kapillare ist bevorzugt eine längliche Ausnehmung, welche bevorzugt um ein Vielfaches länger ist, als die Abmessungen der Kapillare in deren Querschnittsrichtung. Bevorzugt ist die Kapillare, eine langgestreckte, dünne Ausnehmung, deren Länge bevorzugt zumindest 10 mal, weiter bevorzugt zumindest 50 mal, noch weiter bevorzugt zumindest 100 mal, mehr bevorzugt zumindest 500 mal am meisten bevorzugt zumindest 1.000 mal länger ist, als die Abmessungen der Kapillare in der Querschnittsrichtung bzw. im Durchmesser.

Dass die Kapillare "zumindest teilweise" entlang der Strömungsrichtung verläuft, bedeutet dabei, dass die Kapillare nicht ausschließlich parallel zur Strömungsrichtung verlaufen muss. Beispielsweise kann die Kapillare helikal um den Leitungskanal herum angeordnet sein. Besonders bevorzugt verläuft die zumindest eine Kapillare jedoch im Wesentlichen parallel zur Strömungsrichtung, d.h. dass die Kapillare ungeachtet etwaiger Abweichungen, welche beispielsweise dem Fertigungsprozess entstammen können, parallel zur Strömungsrichtung verläuft.

Das Kapillarenmodul kann dabei ein Modul bzw. ein Element sein, in welchem die Kapillare verläuft. Beispielsweise kann das Kapillarenmodul als eine Verstärkung der Leitungswand ausgebildet sein, in welcher die Kapillare verläuft. Das Kapillarenmodul kann vorzugsweise an einem Fluidleitungsbauteil angeordnet werden und/oder mit diesem eine bauliche Einheit bilden.

Das additive Fertigungsverfahren kann beispielsweise 3D-Drucken und/oder SLM (engl.: Selective Laser Melting) und/oder SLS (engl.: Selective Laser Sintering) umfassen oder daraus bestehen.

Die Erfindung bietet den Vorteil, dass Sensorelemente (Temperatur- und/oder Drucksensoren) mittels der zumindest einen Kapillare direkt in das Fluidleitungsbauteil, insbesondere in die Leitungswand, integriert werden können und somit nicht, wie im Stand der Technik bekannt, außen an dem Fluidleitungsbauteil angebracht werden müssen. Somit ermöglicht die Erfindung, Messungen direkt in dem Fluidleitungsbauteil durchzuführen und beispielsweise mittels eines dort angeordneten Temperatursensors eine Kerntemperatur der Leitungswand des Fluidleitungsbauteils zu messen. Dadurch bietet die Erfindung Möglichkeiten für Messungen, welche mit einer herkömmlichen Anordnung von Sensoren an einer Außenseite eines Fluidleitungsbauteils nicht realisierbar sind, da mit einem an der Außenseite angeordneten Sensor die Kerntemperatur der Leitungswand nicht immer eindeutig ermittelt werden kann. Mit anderen Worten kann erfindungsgemäß beispielsweise mittels eines Temperatursensorelements, welches in der Kapillare angeordnet ist, eine Kerntemperatur der Leitungswand unabhängig von einer Temperatur eines etwaig außerhalb des Fluidleitungsbauteils befindlichen Fluides gemessen werden.

Ferner bietet die Erfindung den Vorteil, dass in der zumindest einen Kapillare ein Element, wie etwa ein Sensorelement, geschützt angeordnet werden kann, und dadurch nicht von unter Umständen außerhalb des Fluidleitungsbauteils vorherrschenden, widrigen Bedingungen beeinflusst wird. Beispielsweise kann ein in der zumindest einen Kapillare angeordnetes Element, wie etwa ein Sensorelement, durch die Leitungswand vor etwaigen Fluidströmungen, welche außerhalb des Leitungselements vorliegen, geschützt werden.

Darüber hinaus ist es ein Vorteil der Erfindung, dass das Fluidleitungsbauteil mit Kapillaren in der Leitungswand versehen werden kann, was mit herkömmlichen Fertigungsmethoden von herkömmlichen Fluidleitungsbauteilen nicht realisierbar ist. Insbesondere ist ein Bohren und/oder Fräsen von zumindest einer Kapillare in einer Leitungswand derart, dass die Leitungswand die zumindest eine Kapillare umschließt, typischerweise nicht möglich. Hingegen ermöglicht die Erfindung das Ausbilden zumindest einer solchen Kapillare in der Leitungswand, ohne im Wesentlichen eine Druckbeständigkeit bzw. Druckresistenz des Fluidleitungsbauteils zu vermindern. Insbesondere ist es erfindungsgemäß nicht erforderlich, eine Bohrung in der Leitungswand vorzunehmen und/oder einen Schlitz in die Leitungswand zu fräsen, insbesondere keine Bohrungen und/oder Schlitze, welche deutlich größer sind, als die zu erzeugenden Kapillaren. Somit bietet die Erfindung den Vorteil, dass Kapillaren, welche beispielsweise als Analysekanäle genutzt werden können, an Stellen bzw. Positionen angeordnet werden können, welche mit herkömmlichen Herstellungsverfahren nicht zugänglich sind.

Ferner bietet die Erfindung den Vorteil, dass zusätzliche Elemente, wie etwa Sensorelemente, bereits während des Herstellungsverfahrens des Fluidleitungsbauteils mit in das Fluidleitungsbauteil bzw. in die Leitungswand integriert werden können und/oder nach abgeschlossener Herstellung des Fluidleitungsbauteils in die Kapillare eingebracht werden können. Sofern die zusätzlichen Elemente bereits während dem Herstellungsverfahren des Fluidleitungsbauteils mit in das Fluidleitungsbauteil integriert werden sollen, kann es vorteilhaft sein, die zusätzlichen Elemente optional mit einer Schutzumhüllung zu versehen, sofern die zusätzlichen Elemente empfindliche Elemente, wie etwa Sensorelemente, umfassen. Dadurch können vorzugsweise Schäden an den zusätzlichen Elementen vermieden werden, welche beispielsweise durch hohe Temperaturen und/oder mechanische Krafteinwirkungen während des Herstellungsverfahrens des Fluidleitungsbauteils auftreten könnten.

Alternativ oder zusätzlich ermöglicht die Erfindung, dass in dem Fluidleitungsbauteil verlaufende Kapillaren in einem oder mehreren Kapillarenmodulen bereitgestellt werden können. Derartige Kapillarenmodule können beispielsweise auf ein bereits hergestelltes Fluidleitungsbauteil mittels eines additiven Fertigungsverfahrens aufgedruckt werden und/oder bei der Herstellung des Fluidleitungsbauteils mit dem Fluidleitungsbauteil mit gedruckt werden. Dies ermöglicht zudem, herkömmliche Fluidleitungsbauteile, welche bisweilen nicht mit zumindest einer Kapillaren ausgestattet sind, nachträglich mit zumindest einer in zumindest einem daran angebrachten Kapillarenmodul verlaufenden Kapillare auszustatten. Auf diese Weise können beispielsweise auch die Herstellungskosten für Fluidleitungsbauteile mit zumindest einer Kapillare reduziert werden.

Vorzugsweise ist die Leitungswand mit der zumindest teilweise darin verlaufenden Kapillare und/oder mit dem Kapillarenmodul einstückig ausgebildet. Besonders bevorzugt wird die Leitungswand mittels eines additiven Fertigungsverfahrens einstückig hergestellt. Dies bietet den Vorteil, dass unter Umständen auf aufwendige Bearbeitungsschritte, welche sich aus dem ggf. erforderlichen Zusammensetzen mehrerer einzelner Bauteile ergeben, verzichtet werden kann und somit der Herstellungsaufwand reduziert werden kann. Ferner bietet dies den Vorteil, dass das Fluidleitungsbauteil dadurch vorzugsweise mit einer besonders großen Druckbeständigkeit ausgebildet werden kann, da vorzugsweise keine Schnittstellen und/oder Nahtstellen und/oder Kontaktstellen vorhanden sind, welche die Druckbeständigkeit reduzieren könnten. Vorzugsweise ist das Fluidleitungsbauteil derart ausgebildet, dass das Fluidleitungsbauteil einem Überdruck von zumindest 1 bar, weiter bevorzugt zumindest 2 bar, noch weiter bevorzugt zumindest 10 bar, mehr bevorzugt zumindest 50 bar, viel mehr bevorzugt zumindest 100, am meisten bevorzugt zumindest 200 bar an der Innenseite der Leitungswand relativ zu einem Außendruck an einer Außenseite der Leitungswand standhält.

Vorzugsweise weist das Fluidleitungsbauteil eine Mehrzahl von Kapillaren auf, welche zumindest teilweise entlang der Strömungsrichtung verlaufen und in der Leitungswand und/oder in einem oder mehreren an der Innenseite der Leitungswand angeordneten Kapillarenmodul angeordnet sind. Dies bietet den Vorteil, dass mehrere Kapillaren für die Bereitstellung von Elementen, wie etwa Sensorelementen, bereitgestellt werden können und somit bei Bedarf mehrere Elemente in der Leitungswand bereitgestellt werden können. Beispielsweise können die mehreren Kapillaren eine unterschiedliche Länge aufweisen, so dass die Elemente in den jeweiligen Kapillaren bei unterschiedlichen Positionen in der Leitungswand entlang der Strömungsrichtung positioniert werden können.

Vorzugsweise verlaufen die Kapillaren der Mehrzahl von Kapillaren im Wesentlichen parallel zueinander und/oder parallel zur Strömungsrichtung. Beispielsweise können die Kapillaren in der Leitungswand helikal um den Leitungskanal verlaufen und/oder geradlinig entlang der Strömungsrichtung verlaufen. Dies bietet den Vorteil, dass die Kapillaren für verschiedene Zwecke, insbesondere für verschiedene Sensoren und/oder Messverfahren, ausgebildet sein können.

Vorzugsweise ist die zumindest eine Kapillare an zumindest einer Kontaktstelle mit dem Leitungskanal verbunden. Dies bietet den Vorteil, dass beispielsweise ein in der zumindest einen Kapillare angeordnetes Sensorelement an der Kontaktstelle mit dem Leitungskanal in fluidischem Kontakt stehen kann. Dadurch kann erreicht werden, dass beispielsweise Messungen direkt an einem durch den Leitungskanal strömenden Fluid mittels eines an der Kontaktstelle in das Fluid ragenden Sensorelements durchgeführt werden können, wobei das Sensorelement und/oder eine Verbindungsleitung durch die zumindest eine Kapillare geführt wird.Beispielsweise kann dies dazu dienen, einen Druck des durch den Leitungskanal strömenden Fluides zu messe, da die Kapillare vorzugsweise eine druckstabile Verbindung zwischen dem Fluid und einem beispielsweise an einem an anderer Stelle in der Kapillare und/oder an einem andere Ende der Kapillare angeordneten Sensorelement bzw. Drucksensor ermöglicht.. Ferner kann vorzugsweise über die zumidnest eine Kontaktstelle eine Änderung einer stofflichen Zusammensetzung des Fluides, während das Fluid das Fluidleitungsbauteil durchströmt, gemessen werden. Zudem können vorzugsweise dadurch neue Erkenntnisse für eine Optimierung derartiger Apparate bzw. derartiger Fluidleitungsbauteile gewonnen werden und/oder eine verbesserte Steuer- bzw. Regelbarkeit von darin ablaufenden Prozessen erzielt werden.

Vorzugsweise umfasst das Fluidleitungsbauteil zumindest ein an der Innenseite der Leitungswand ausgebildetes Abschirmelement, welches derart angeordnet ist, dass das zumindest eine Abschirmelement die zumindest eine Kontaktstelle von dem in Strömungsrichtung durch den Leitungskanal strömenden Fluid abschirmt. Beispielsweise kann das Abschirmelement in Form einer Kappe und/oder eines Vorsprungs ausgebildet sein und von der Innenseite der Leitungswand in den Leitungskanal hineinragen. Vorzugsweise ist das zumindest eine Abschirmelement derart angeordnet, dass eine oder mehrere Kontaktstellen in unmittelbarer Nähe auf der strömungsabgewandten Seite des Abschirmelements angeordnet sind. Mit anderen Worten befindet sich zumindest eine Kontaktstelle im "Strömungsschatten" des zumindest einen Abschirmelements. Dies bietet den Vorteil, dass die Kontaktstelle zumindest nicht direkt und/oder zumindest nicht vollständig von dem Fluidstrom in dem Leitungskanal erfasst wird. Beispielsweise kann durch das Abschirmelement vermieden werden, dass sich an einem an der Kontaktstelle ausgebildeten Sensorelement Kondensate ausbilden und/oder ablagern und sich nachteilhaft auf die Funktion des Sensorelements und/oder die Messung auswirken.

Vorzugsweise umfasst das Ausbilden der Leitungswand ein Integrieren zumindest eines Sensorelements in der zumindest einen Kapillare umfasst. Insbesondere wird das zumindest eine Sensorelement bereits dann in die Kapillare eingebracht bzw. integriert, wenn die Kapillare bzw. die Leitungswand mit der Kapillare und/oder das Kapillarenmodul ausgebildet wird, insbesondere mittels eines additven Fertigungsverfahrens. Dies bietet den Vorteil, dass das zumindest eine Sensorelement a Positionen bzw. Kapillaren angeordnet werden kann, welche gegebenenfalls nach der Fertigstellung der Kapillare bzw. der Leitungswand bzw. des Kapillarenmoduls nicht oder nur sehr schwer zugänglich sind.

Weitere Vorteile und Ausgestaltungen der Erfindung ergeben sich aus der Beschreibung und den beiliegenden Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in den Zeichnungen schematisch dargestellt und wird im Folgenden unter Bezugnahme auf die Zeichnungen beschrieben.

### Figurenbeschreibung

Figur 1A zeigt in einer schematischen Querschnittsdarstellung ein Fluidleitungsbauteil gemäß einer ersten bevorzugten Ausführungsform.
Figur 1B zeigt in einer schematischen Querschnittsdarstellung ein Fluidleitungsbauteil gemäß einer zweiten bevorzugten Ausführungsform.
Figur 1C zeigt in einer schematischen Querschnittsdarstellung ein Fluidleitungsbauteil gemäß einer dritten bevorzugten Ausführungsform.
Figur 2 zeigt in einer schematischen Längsschnittdarstellung ein Fluidleitungsbauteil gemäß einer vierten bevorzugten Ausführungsform.

Die Figuren 3A und 3B zeigen in schematischen Darstellungen ein Fluidleitungsbauteil gemäß einer fünften bevorzugten Ausführungsform.

Figur 4 zeigt in einer schematischen, perspektivischen Darstellung ein Fluidleitungsbauteil gemäß einer sechsten bevorzugten Ausführungsform.

### Detaillierte Beschreibung der Zeichnungen

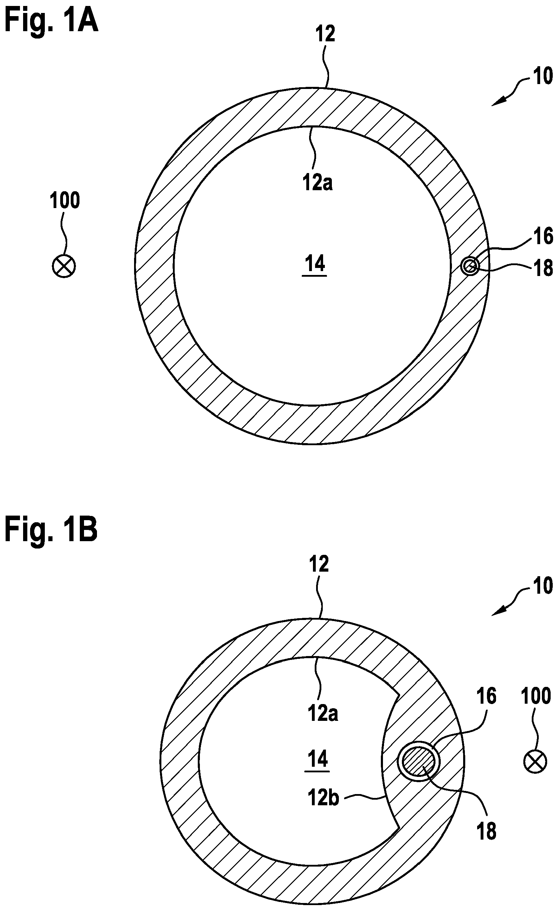

Figur 1A zeigt in einer schematischen Querschnittsdarstellung ein Fluidleitungsbauteil 10 gemäß einer ersten bevorzugten Ausführungsform der Erfindung, wobei das Fluidleitungsbauteil 10 als eine Rohrleitung ausgebildet ist. Wenngleich das beispielhaft dargestellte Fluidleitungsbauteil 10 einen runden Querschnitt aufweist, sind auch andere Querschnittsformen und/oder Querschnittsgrößen möglich. Das Fluidleitungsbauteil 10 weist eine Leitungswand 12 auf, welche einen zylinderrohrförmigen Querschnitt aufweist und einen durch die Innenseite 12a der Leitungswand 12 begrenzten Leitungskanal 14 bildet. Das Fluidleitungsbauteil 10 ist dabei derart ausgebildet, dass durch den Leitungskanal 14 in eine Strömungsrichtung 100 ein Fluid durch das Fluidleitungsbauteil 10 strömen kann. Insbesondere kann das Fluid dabei unter Druck stehen und einen Druck auf die Innenwand bzw. Innenseite 12a der Leitungswand 12 ausüben.

Darüber hinaus weist das Fluidleitungsbauteil 10 eine Kapillare 16 auf, welche in der Leitungswand 12 mittig ausgebildet ist und parallel zur Leitungswand 12 und zur Strömungsrichtung 100 verläuft. Die Kapillare 16 hat dabei eine runde Querschnittsform, wenngleich auch andere Querschnittsformen möglich sind. Der Querschnitt der Kapillare 16 ist dabei kleiner als die Wandstärke bzw. Dicke der Leitungswand 12 und die Kapillare 16 ist derart relativ zur Leitungswand 12 angeordnet, dass die Leitungswand 12 die Kapillare 16 umschließt. Insbesondere ist die Größe des Querschnitts der Kapillare 16 deutlich kleiner als die Dicke der Leitungswand 12, sodass die Leitungswand 12 eine ausreichende Druckbeständigkeit aufweist, um das Fluid mit dem vorgesehenen bzw. gewünschten Druck durch das Fluidleitungsbauteil 10 strömen lassen zu können, ohne das Fluidleitungsbauteil 10 bzw. Leitungswand 12 zu beschädigen. Beispielsweise können die Kapillare 16 und die Leitungswand 12 derart ausgebildet sein, dass die Dicke der Leitungswand 12 mindestens doppelt so groß ist wie der Querschnitt der Kapillare 16 in der Richtung der Dicke der Leitungswand 12.

Gemäß der gezeigten Ausführungsform ist in der Kapillare 16 ein Sensorelement 18 angeordnet, welches innerhalb der Kapillare 16 entlang der Strömungsrichtung 100 verläuft und somit von der Leitungswand 12 umschlossen ist.

Figur 1B zeigt in einer Querschnittsdarstellung ein Fluidleitungsbauteil 10 gemäß einer zweiten bevorzugten Ausführungsform. Dieses weicht insbesondere dadurch von der in Figur 1A dargestellten Ausführungsform ab, dass der Durchmesser der Kapillare 16 relativ zur Dicke der Leitungswand 12 größer ist. Um dennoch sicherzustellen, dass die Leitungswand 12 bzw. das Fluidleitungsbauteil 10 die gewünschten Eigenschaften hinsichtlich einer Druckbeständigkeit aufweist, d.h. dass das Fluidleitungsbauteil 10 dem gewünschten bzw. vorgesehenen Druck des Fluides standhält, weist die Leitungswand 12 an der Innenseite 12a einen Verstärkungsabschnitt 12b auf, welcher zusammen mit der übrigen Leitungswand 12 die Kapillare 16 eingebettet. Dies ermöglicht somit, auch große Verhältnisse des Kapillarendurchmessers relativ zur Dicke der Leitungswand 12 zu realisieren, ohne dabei Nachteile hinsichtlich einer Druckresistenz des Fluidleitungsbauteils 10 in Kauf nehmen zu müssen. Vorzugsweise wird das Fluidleitungsbauteil 10 bereits während der Herstellung mit dem Verstärkungsabschnitt 12b und der Kapillare 16 ausgebildet, insbesondere mittels eines additiven Fertigungsverfahrens, beispielsweise unter Verwendung eines 3D-Druckers.

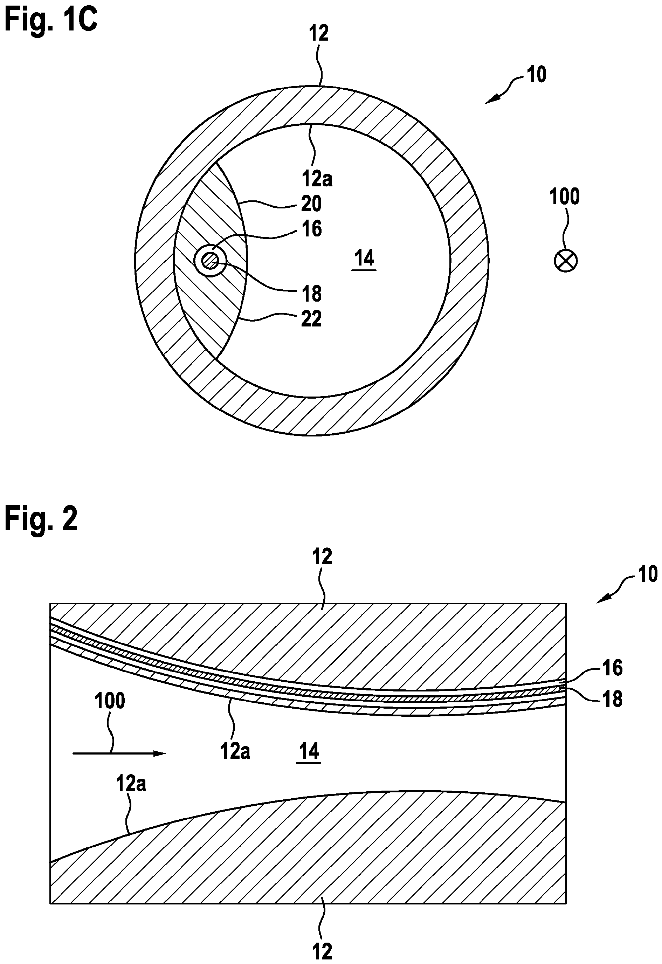

Figur 1C zeigt in einer Querschnittsdarstellung ein Fluidleitungsbauteil 10 gemäß einer dritten bevorzugten Ausführungsform. Gemäß dieser Ausführungsform verläuft die Kapillare 16 nicht direkt in der Leitungswand 12, sondern verläuft in einem zusätzlich ausgebildeten Kapillarenmodul 20. Das Kapillarenmodul 20 umfasst dabei eine Druckmasse 22, welche vorzugsweise direkt an die Innenseite 12a der Leitungswand 12 gedruckt ist und mit dieser verbunden ist. Beispielsweise ist denkbar, dass das Kapillarenmodul 20 nachträglich, d.h. nach erfolgter Herstellung der Leitungswand 12, an die Innenseite der Leitungswand 12 aufgedruckt werden kann, und somit ein zunächst ohne Kapillaren 16 ausgebildetes Fluidleitungsbauteil 10 um ein Kapillarenmodul 20 und zumindest eine Kapillare 16 erweitert werden. Gemäß anderer bevorzugter Ausführungsformen (nicht gezeigt) können beispielsweise in der Leitungswand 12 verlaufende Kapillaren 16 mit einem Kapillarenmodul 20 und darin verlaufenden Kapillaren 16 in einem Fluidleitungsbauteil 10 kombiniert werden.

Figur 2 zeigt in einer Längsschnittdarstellung ein Fluidleitungsbauteil 10 gemäß einer vierten bevorzugten Ausführungsform, wobei das Fluidleitungsbauteil 10 als eine Düse ausgebildet ist. Die Düse ist dabei derart ausgestaltet, dass entlang der Strömungsrichtung 100 ein Fluid unter hohem Druck durch die Düse strömen kann. Auch gemäß dieser bevorzugten Ausführungsform ist in der Seitenwand 12 eine Kapillare 16 ausgebildet, welche entlang der Düse bzw. entlang der Strömungsrichtung 100 verläuft. In der Kapillare 16 ist ein Sensorelement 18 ausgebildet, beispielsweise ein Temperatursensor, mit welchem die Temperatur im Kern der Seitenwand 12 gemessen werden kann.

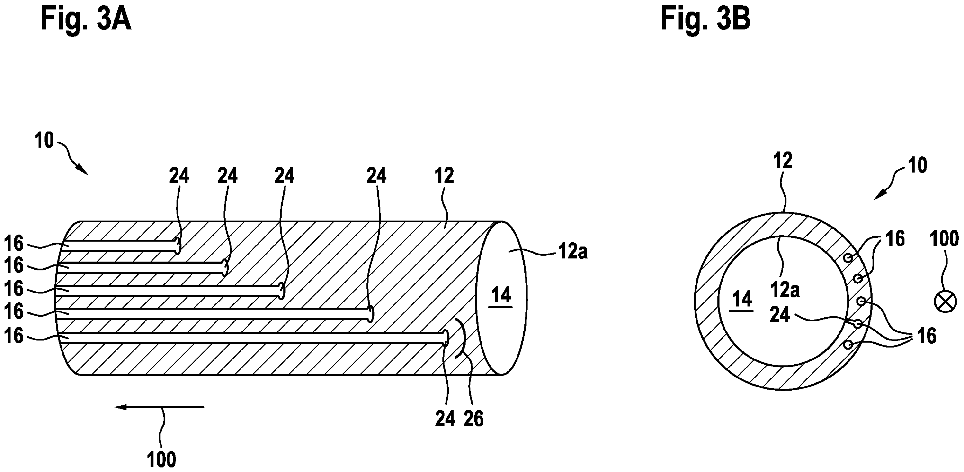

Die Figuren 3A und 3B zeigen in einer schematischen Darstellung ein Fluidleitungsbauteil 10 gemäß einer fünften bevorzugten Ausführungsform in einer schematischen, perspektivischen Darstellung (Fig. 3A) und in einer Querschnittdarstellung (Fig. 3B). Gemäß dieser bevorzugten Ausführungsform sind in der Leitungswand 12 mehrere Kapillaren 16 ausgebildet, welche parallel zueinander und parallel zur Strömungsrichtung 100 verlaufen. Die Kapillaren 16 weisen dabei jeweils unterschiedliche Längen auf und enden entlang der Strömungsrichtung 100 in unterschiedlichen Abschnitten des Fluidleitungsbauteils 10 bzw. der Leitungswand 12. An den jeweiligen Enden der Kapillaren 16 sind Kontaktstellen 24 ausgebildet, an welchen die Kapillaren 16 mit der Innenseite 12a der Leitungswand 12 bzw. mit dem Leitungskanal 14 verbunden sind. Dies ermöglicht beispielsweise mit Sensorelementen (nicht gezeigt), welche in den jeweiligen Kapillaren 16 angeordnet sind, Messungen im Leitungskanal 14 in den jeweiligen Abschnitten des Fluidleitungsbauteils 10 vorzunehmen, in welchen die Kapillaren 16 über die Kontaktstellen 24 mit dem Leitungskanal 14 verbunden sind, um an unterschiedlichen Stellen entlang der Strömungsrichtung 100 Messungen im strömenden Fluid vorzunehmen. Beispielsweise kann auf diese Weise ein Druck- und/oder Temperaturverlauf und/oder ein Verlauf einer stofflichen Zusammensetzung des durch das Fluidleitungsbauteil strömenden Fluides entlang der Strömungsrichtung 100 gemessen werden. Beispielsweise kann eine direkte stoffliche Verbindung über die Kontaktstellen 24 eine chemische und/oder physikalische Analyse des Fluids ermöglichen, beispielsweise mittels eines Gaschromatographen. Insbesondere kann dies für die Verwendung eines derartigen Fluidleitungsbauteils 10 in einem Rohrreaktor vorteilhaft sein, um entlang des Fluidleitungsbauteils 10 beispielsweise eine fortschreitende chemische Reaktion messen zu können.

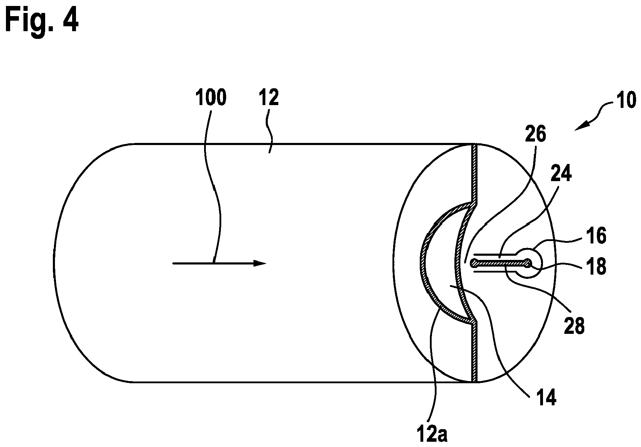

Ferner ist in Figur 3A ein Abschirmelement 26 symbolisch dargestellt, welches derart angeordnet ist, dass die Kontaktstelle 24 der unten dargestellten Kapillare 16 zumindest teilweise von einem in Strömungsrichtung 100 durch den Leitungskanal 14 strömenden Fluid abgeschirmt wird, beispielsweise um zu bewirken, dass ein an der Kontaktstelle 24 angeordnetes Sensorelement (nicht dargestellt) nicht direkt von dem Fluid erfasst wird. Weitere Details zu dem Abschirmelement sind mit Bezug auf Figur 4 erläutert.

Ein Fluidleitungsbauteil 10 gemäß dieser Ausführungsform kann beispielsweise vorteilhaft sein, um auf zuverlässige Weise ein Druckverlustprofil des durch das Fluidleitungsbauteil strömenden Fluides zu messen. Sofern das Fluidleitungsbauteil 10 als Reaktionsraum und/oder in einem Rohrreaktor verwendet wird, kann vorzugsweise ein Fortschritt bzw. ein Ablauf einer darin stattfindenden chemischen Reaktion, beispielsweise mittels einer Stoffanalyse, gemessen werden. Ferner kann vorzugsweise eine Änderung einer stofflichen Zusammensetzung des Fluides, während das Fluid das Fluidleitungsbauteil 10 durchströmt, gemessen werden. Zudem können dadurch neue Erkenntnisse für eine Optimierung derartige Apparate bzw. der Fluidleitungsbauteile 10 gewonnen werden und/oder eine verbesserte Steuer- bzw. Regelbarkeit von darin ablaufenden Prozessen erzielt werden.

Insbesondere kann jede der Kapillaren 16 mit einem Sensorelement 18 versehen sein. Beispielsweise kann jede der Kapillaren 16 einen Temperatursensor und/oder einen Drucksensor und/oder einen sonstigen physikalischen oder chemischen Sensor aufweisen. Die Sensorelemente 18 können sodann zeitgleich und/oder sequentiell zeitlich nacheinander ausgelesen werden.

Figur 4 zeigt in einer schematischen, perspektivischen Darstellung ein Fluidleitungsbauteil 10 gemäß einer sechsten bevorzugten Ausführungsform. Dabei weist das Fluidleitungsbauteil 10 ein Abschirmelement 26 auf, welches in Form eines Vorsprungs von der Innenseite 12a der Leitungswand 12 in den Leitungskanal 14 hineinragt, um auf diese Weise ein an einer in Strömungsrichtung 100 dahinter angeordneten Kontaktstelle 24 positioniertes Sensorelement 18, und insbesondere den an der Kontaktstelle 24 angeordneten Sensorkopf 28, von der Fluidströmung abzuschirmen. Dadurch kann beispielsweise der an der Kontaktstelle 24 positionierte Sensorkopf 28 vor einer direkten Erfassung durch das Fluid geschützt werden.

Insbesondere kann das Abschirmelement 26 derart ausgestaltet und/oder angeordnet sein, dass mittels einem an der zugehörigen Kontaktstelle 24 angeordneten Sensorkopfs 28 ein optimiertes Messverfahren durchgeführt werden kann. Beispielsweise kann ein Fluidleitungsbauteil 10 wie in Figur 4 dargestellt besonders vorteilhaft für eine Temperaturmessung in einem in einer Gasleitung ausgebildeten Fluidleitungsbauteils 10 sein. Wird beispielsweise das Fluidleitungsbauteil von einem überhitzten Gas als Fluid durchströmt, welches auch einen Tröpfchenmitriss bewirkt, kann das Abschirmelement 26 das an der Kontaktstelle 24 angeordnete Sensorelement 18 davor schützen, dass sich durch das Fluid mitgerissene Tröpfchen an dem Sensorkopf 28 ablagern bzw. ansetzen bzw. den Sensorkopf 28 benetzen. Somit ermöglicht das Abschirmelement, dass mittels des Sensorelements 18 eine zuverlässige Messung der Temperatur des gasförmigen Fluides erfolgen kann, ohne dass die Temperaturmessung durch mitgerissenes flüssiges Fluid beeinträchtigt wird, was andernfalls beispielsweise durch ein Verdampfen von auf das Sensorelement 18 auftreffender Tröpfchen der Fall wäre, in welchem Fall lediglich die Kühlgrenztemperatur gemessen werden würde.

### Bezugszeichen

- 10: Fluidleitungsbauteil
- 12: Leitungswand
- 12a: Innenseite der Leitungswand
- 12b: Verstärkungsabschnitt
- 14: Leitungskanal
- 16: Kapillare
- 18: Sensorelement
- 20: Kapillarenmodul
- 22: Druckmasse
- 24: Kontaktstelle
- 26: Abschirmelement
- 28: Sensorkopf

## Patentansprüche

1. Fluidleitungsbauteil (10), welches dazu ausgelegt ist, von einem Fluid in einer Strömungsrichtung (100) durchströmt zu werden, aufweisend:
- eine Leitungswand (12), welche sich entlang der Strömungsrichtung (100) erstreckt und zumindest teilweise einen Leitungskanal (14) bildet;
- zumindest eine Kapillare (16), welche zumindest teilweise entlang der Strömungsrichtung (100) und innerhalb der Leitungswand (12) verläuft und von dieser umschlossen ist und/oder innerhalb eines an einer dem Leitungskanal (14) zugewandten Innenseite (12a) der Leitungswand (12) angeordneten Kapillarenmodul (20) angeordnet ist und von diesem umschlossen ist;
wobei die Leitungswand (12) mit der zumindest teilweise darin verlaufenden Kapillare (16) und/oder mit dem Kapillarenmodul (20) zumindest teilweise durch ein additives Fertigungsverfahren ausgebildet ist.

2. Fluidleitungsbauteil (10) gemäß Anspruch 1, wobei die Leitungswand (12) mit der zumindest teilweise darin verlaufenden Kapillare (16) und/oder mit dem Kapillarenmodul (20) einstückig ausgebildet ist.

3. Fluidleitungsbauteil (10) gemäß Anspruch 1 oder 2, aufweisend eine Mehrzahl von Kapillaren (16), welche zumindest teilweise entlang der Strömungsrichtung (100) verlaufen und in der Leitungswand (12) und/oder in einem oder mehreren an der Innenseite (12a) der Leitungswand (12) angeordneten Kapillarenmodul (20) angeordnet sind.

4. Fluidleitungsbauteil (10) gemäß Anspruch 3, wobei die Kapillaren (16) der Mehrzahl von Kapillaren (16) im Wesentlichen parallel zueinander und/oder parallel zur Strömungsrichtung (100) verlaufen.

5. Fluidleitungsbauteil (10) gemäß einem der vorhergehenden Ansprüche, wobei die zumindest eine Kapillare (16) an zumindest einer Kontaktstelle (24) mit dem Leitungskanal (14) verbunden ist.

6. Fluidleitungsbauteil (10) gemäß Anspruch 5, ferner umfassend ein an der Innenseite (12a) der Leitungswand ausgebildetes Abschirmelement (26), welches derart angeordnet ist, dass das Abschirmelement (26) die zumindest eine Kontaktstelle (24) von dem in Strömungsrichtung (100) durch den Leitungskanal (14) strömenden Fluid abschirmt.

7. Fluidleitungsbauteil (10) gemäß einem der vorhergehenden Ansprüche, wobei in der zumindest einen Kapillare (16) zumindest ein Sensorelement (18) angeordnet ist.

8. Fluidleitungsbauteil (10) gemäß einem der vorhergehenden Ansprüche, wobei das Fluidleitungsbauteil (10) derart ausgebildet ist, dass das Fluidleitungsbauteil (10) einem Überdruck von zumindest 1 bar an der Innenseite (12a) der Leitungswand (12) relativ zu einem Außendruck an einer Außenseite der Leitungswand (12) standhält.

9. Fluidleitungsbauteil (10) gemäß einem der vorhergehenden Ansprüche, wobei das Fluidleitungsbauteil (10) als ein Rohrleitungsbauteil und/oder als eine Düse ausgebildet ist.

10. Verfahren zur Herstellung eines Fluidleitungsbauteils (10), umfassend ein Ausbilden einer einen Leitungskanal (14) umschließenden Leitungswand (12) mit zumindest einer innerhalb der Leitungswand (12) verlaufenden und von der Leitungswand (12) umschlossenen Kapillare (16) und/oder mit einem an einer Innenseite (12a) der Leitungswand (12) angeordneten Kapillarenmodul (20), in welchem die Kapillare (16) verläuft und welches die Kapillare (16) umschließt, wobei das Ausbilden zumindest teilweise durch ein additives Fertigungsverfahren erfolgt.

11. Verfahren gemäß Anspruch 10, wobei das Ausbilden der Leitungswand (12) ein Integrieren zumindest eines Sensorelements (18) in der zumindest einen Kapillare (16) umfasst.
